# EUROPEAN PATENT SPECIFICATION

(11) **EP 0 601 558 B1**
(45) Date of publication and mention of the grant of the patent: **15.07.1998**
(21) Application number: 93119771.9
(22) Date of filing: 08.12.1993
(51) Int. Cl.: G02B 6/28, G02B 6/38

(54) **Optical Demultiplexing/Multiplexing Device**
Optischer Demultiplexer/Multiplexer
Démultiplexeur/multiplexeur optique

(30) Priority: 08.12.1992 JP 351832/92
(43) Date of publication of application: 15.06.1994
(73) Proprietor: SEIKOH GIKEN Co., Ltd., Matsudo-shi, Chiba-ken (JP)
(72) Inventor: Takahashi, Mitsuo, Matsudo-shi Chiba-ken (JP)
(74) Representative: Zenz, Joachim Klaus, Dipl.-Ing.

(56) References cited:
- EP-A- 0 151 065
- DE-A- 4 243 342
- FR-A- 2 552 236
- US-A- 4 708 424
- US-A- 5 000 530

## Description

### BACKGROUND OF THE INVENTION

The present invention relates to an optical demultiplexing/multiplexing device which is used in an optical fiber communication circuit to demultiplex a light signal into a plurality of circuits or to multiplex a plurality of light signals into a single circuit, and especially to the optical demultiplexing/multiplexing device having flat spectral response for light signals consisting of a plurality of light wavelength. It also relates to the simplification of the structure of the optical multiplexing device to demultiplex light signals from each of one or more optical fibers into a plurality of circuits, or to multiplex light signals from a plurality of optical fibers into one circuit.

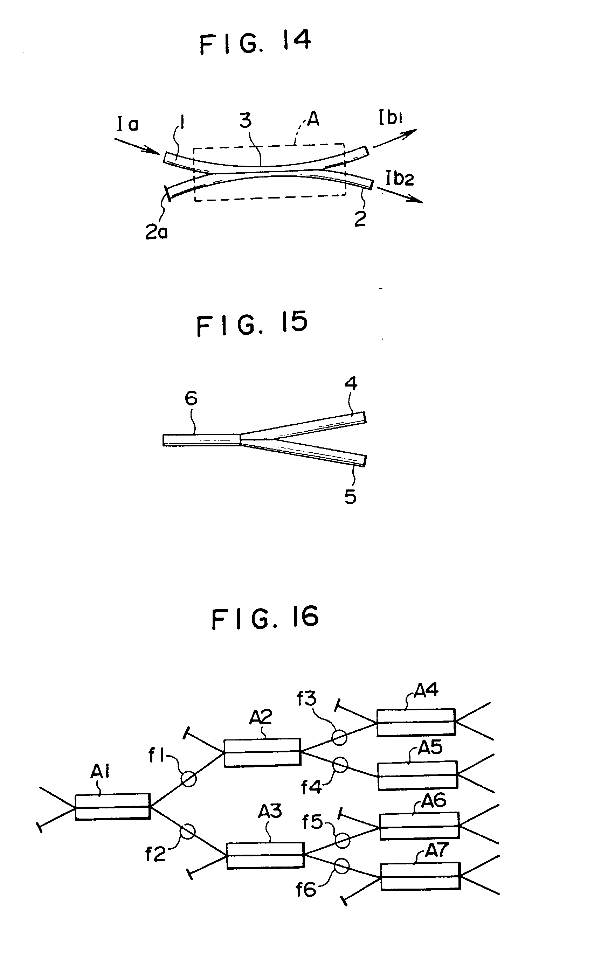

Figure 14 shows an example of the 2 x 2 optical demultiplexing/multiplexing device. In Figure 14, "A" indicates the main body of the 2 x 2 optical demultiplexing/ multiplexing device. In the optical demultiplexing/ multiplexing device, the multiplexing section is composed of a pair of optical fiber elements 1 and 2. The optical multiplexing device is constructed by partly alloying the pair of optical fiber elements in accordance with the "alloying and extending optical fibers" (AE) method, or by alloying the surfaces of the pair of optical fiber elements after they are polished in accordance with the "polishing the surfaces of optical fibers" (PS) method. The light signal passing through one optical fiber partly goes to the other optical fiber, and this type of optical coupling is accomplished by Evanescent effect.

Light signal Ia passing through optical fiber element 1 branches into light signals Ib₁ and Ib₂ at junction 3. Since optical fiber element 2 is unconnected at end portion 2a, optical fiber element 2 is cut at end portion 2a and terminated there in such a manner that no light signal can reflect therefrom. The optical power ratio of light signal Ib₂ branching into optical fiber element 2 to light signal Ib₁ passing through optical fiber element 1 changes depending on the optical wavelength of the light signal if light signal Ia goes through junction 3 rightwards on an optical demultiplexing/ multiplexing device actualized in accordance with the Evanescent effect. That is, the coupling coefficient of one optical fiber to the other changes in accordance with optical signal wavelength. An optical demultiplexing/multiplexing circuit used to demultiplex an input light signal into more than two output light signals consists of two or more demultiplexing/multiplexing devices of this type, and variations of the optical power ratios from the defined value are added every time the demultiplexing/multiplexing device of this type is added to demultiplex an input light signal into two output light signals. This type of variations result in inferior uniformity in optical output powers at the demultiplexing/multiplexing circuit outputs.

Figure 15 shows another example of the 2 x 2 optical demultiplexing/multiplexing device, which can improve the inferior uniformity in optical output powers at the demultiplexing/multiplexing circuit outputs. In Figure 15, optical fiber elements 4 and 5 are sharply cut, sliced, and spliced at lefthand end portions thereof. The end portions are thus combined to yield another optical fiber element, and the optical fiber element is connected to optical fiber element 6 at their lefthand end portions.

This type of optical demultiplexing/multiplexing device wherein one optical fiber element is connected to a pair of optical fiber elements whose connecting end portions are sharply cut, sliced, and spliced at lefthand end portions thereof is disclosed in United States Patents No. 4,666,541 and 4,720,161. Furthermore, FR-A-2 552 236 shows several of the devices according to Figure 15 which are arranged in parallel within a coupling device.

Alignment of the optical axes of the optical fiber elements, method of the works for the optical fiber elements, and process of these works cause problems if these patents are actualized to construct an optical demultiplexing/multiplexing device.

Figure 16 shows the configuration of a 1x8 optical demultiplexing/multiplexing device. The 1x8 optical demultiplexing/multiplexing device consists of seven 2x2 optical demultiplexing/multiplexing devices Al through A7 and these 2x2 optical demultiplexing/multiplexing devices are connected together at junctions fl through f6.

The "fusion-and-splicing" method, wherein the optical fiber elements to be connected are spliced at the end portions thereof to form a junction and alloyed there by discharge arc, is mainly used for connecting one optical demultiplexing/ multiplexing device to another.

An interconnection loss of 0.1 to 0.5 dB per junction occurs in optical fiber connections, and the interconnection losses are added for the optical demultiplexing/multiplexing device with multiple junctions. The demultiplexing/ multiplexing device requires a plurality of connection parts, and the optical demultiplexing/multiplexing device with multiple junctions occupies greater volume for the greater number of junctions.

In addition, the work for interconnecting a plurality of junctions in the respective 2 x 2 demultiplexing/multiplexing devices needs two or three minutes to fabricate a complete multiple junction device if the fusion-and-splicing method is employed to connect between optical fiber elements.

The inventor of the present invention has disclosed US Patents No. 5,074,634 and No. 5,000,530 to reduce the time needed for the troublesome works of alloying the interconnections of the respective 2 x 2 multiple junction devices.

Since the optical demultiplexing/multiplexing device with multiple junctions built in accordance with US Patents No. 5,074,634 and No. 5,000,530 is made of a plurality of 2 x 2 demultiplexing/multiplexing devices, the multiple junction device is expensive because the respective 2 x 2 demultiplexing/multiplexing device is expensive. In addition, the fabrication of the optical demultiplexing/multiplexing device with multiple junctions needs a greater number of processes including uneasy works. The device with multiple junctions furthermore occupies greater volume.

The demultiplexing/multiplexing device with multiple junctions in the prior art containing many parts is expensive, and its response varies depending on the wavelength.

An objective of the present invention is to provide a demultiplexing/multiplexing device with multiple junctions, which can easily be built, and contains smaller number of parts with its response flat over the specified wavelength range.

Another objective of the present invention is to provide the optical demultiplexing/multiplexing device of star or tree type, which is made with only one optical connector, characterizing easiness of construction with smaller number of parts, exhibiting flat response over the specified wavelength range.

### SUMMARY OF THE INVENTION

The 1 x 4 optical demultiplexing/multiplexing device built in accordance with first through third embodiments of the present invention consists of a feedthrough optical fiber having an optical fiber element whose end portion is adapted to feed input light signal to another optical fiber element;
a set of three multiplexing optical fiber components, each optical fiber component comprising a pair of optical fiber elements whose end portions at one end are cut, sliced along their axes and spliced over a predetermined length S so as to form an optical fiber component end portion having the same diameter as said end portion of said feedthrough optical fiber element;
matched first and second connector plugs, each having at least three alignment holes which mate with the corresponding alignment holes in the other connector plug, when the plugs are aligned; and
connecting means to keep said first and second connector plugs connected.

In first embodiment of the present invention, said end portion of said feedthrough optical fiber element is put into a first alignment hole of the first connector plug, the spliced end portion of the first multiplexing optical fiber component is put into the first alignment hole of the second connector plug, the end portions of said pair of optical fiber elements of the first optical fiber component are respectively put into the second and the third alignment hole of said first connector plug, and the spliced end portions of the remaining two of said three multiplexing optical fiber components are respectively put into the second and the third alignment hole of said second connector plug, and said first and second connector plugs are joined by said connecting means.

In second embodiment of the present invention, said end portion of said feedthrough optical fiber element is put into first alignment hole of the first connector plug, the spliced end portion of the first multiplexing optical fiber component is put into the first alignment hole of the second connector plug, the end portions of said pair of multiplexed optical fiber elements of the first optical component are respectively put into the second and the third alignment hole of said second connector plug, and the spliced end portions of the remaining two of said three multiplexing optical fiber components are respectively put into the second and the third alignment hole of said first connector plug, and said first and second connector plugs are joined by said connecting means.

In third embodiment of the present invention, said end portion of said feedthrough optical fiber element is put into a first alignment hole of the first connector plug, the spliced end portion of the first multiplexing optical fiber component is put into the first alignment hole of the second connector plug, the end portion of one of said pair of optical fiber elements of the first optical fiber component is put into the second alignment hole of said second connector plug, the end portion of the other of said pair of optical fiber elements of the first optical fiber component is put into the third alignment hole of said first connector plug, the spliced end portions of the remaining two of said multiplexing optical fiber components are respectively put into the second alignment hole of said first connector plug and the third alignment hole of said second connector plug, and said first and second connector plugs are joined by said connecting means.

The 1x2ⁿ (n≧ 3: integer) optical demultiplexing/multiplexing device in accordance with fourth embodiment of the present invention consists of a feedthrough optical fiber having an optical fiber element whose end portion is adapted to feed input light signal to another optical fiber;
a plurality of multiplexing optical fiber components, each optical fiber component comprising a pair of optical fiber elements whose end portions at one end are cut, sliced along their axes and spliced over a predetermined length S so as to form an optical fiber component end portion having a circular cross-section:
matched first and second connector plugs, each having a plurality of alignment holes precisely arranged in line which mate with the corresponding alignment holes in the mating connector plug, when the plugs are aligned; and
connecting means to keep said first and second plugs connected.

In fourth embodiment of the present invention, one of said pair of connector plugs is used as a multiplexing connector plug where the spliced end portions of said plurality of multiplexing optical fiber components are respectively put into the corresponding alignment holes thereof, the other of said pair of connector plugs is used as a feedthrough connector plug where said feedthrough optical fiber element is put into the first alignment hole in the first row thereof, the end portions of a pair of optical fiber elements leading from the first alignment hole of said multiplexing connector plug are respectively put into the second and the third alignment hole in the second and the third row of said feedthrough connector plug, the end portions of a pair of optical fiber elements leading from the second alignment hole in the second row of said multiplexing connector plug are respectively put into the fourth and the fifth alignment hole in the fourth and the fifth row of said feedthrough connector plug, the end portions of a pair of optical fiber elements leading from the third alignment hole in the third row of said multiplexing connector plug are respectively put into the sixth and the seventh alignment hole in the sixth and the seventh row of said feedthrough connector plug, the same configurations are repeated to multiplex the light signals into 2ⁿ (n ≥ 3: integer) circuits, and said feedthrough and multiplexing connector plugs are joined by connecting means.

### BRIEF DESCRIPTION OF THE DRAWINGS

Figure 1(a) shows an extended top view and Figure 1(b) shows an enlarged side view of the feedthrough optical fiber used in a first embodiment of the optical demultiplexing/multiplexing device built in accordance with the present invention.

Figure 2(a) shows an extended top view and Figure 2(b) shows a side view of the multiplexing optical fiber component used in first embodiment of the optical demultiplexing/ multiplexing device built in accordance with the present invention.

Figure 3(a) shows a side view of second connector plug used to construct first embodiment of the optical multiplexing device. Figure 3(b) shows a top view of the second connector plug sectioned by X-X' line of Figure 3(a). Fig. 3(c) shows a top view of a first connector plug.

Figure 4(a) shows a top view of the first connector plug sectioned by Z-Z' of Figure 4(b) whereto a plurality of feedthrough optical fibers can apply. Figure 4(b) shows a side view thereof.

Figure 5(a) shows a side view of the second connector plug whereto a plurality of multiplexing optical fiber components can apply. Figure 5(b) shows a top view thereof.

Figure 6 shows a cross-sectional top view of first and second connector plugs where the end portions of first multiplexing optical fiber components in second connector plug are applied to second and third rows of first connector plug.

Figure 7 shows a cross-sectional top view of first and second connector plugs of Figure 6 which are set together.

Figure 8 show a front view of first and second connector plugs of Figure 7, which are set together by using a pair of looped optical fiber components.

Figures 9(a), 9(b) and 9(c) show the different types of connections of first connector plug to second connector plug respectively in first embodiment of the present invention.

Figure 10 shows the connections of first connector plug to second connector plug in second embodiment of the optical demultiplexing/multiplexing device of star type built in accordance with the present invention.

Figure 11 shows a top view of first and second connector plugs in second embodiment of the optical demultiplexing/ multiplexing device.

Figure 12(a) shows a side view of first connector plug of "2m" type connection in a third embodiment of the optical demultiplexing/multiplexing device. Figure 12(b) shows a top view thereof and Figure 12(c) a side view thereof.

Figure 13(a) shows an enlarged section of an optical fiber used in the first connector plug of third embodiment of the optical demultiplexing/multiplexing device. Figure 13(b) shows a front section thereof. Figure 13(c) shows an enlarged section thereof.

Figure 14 shows an example of the 1 x 2 optical demultiplexing/multiplexing device in the prior art.

Figure 15 shows another example of the 1 x 2 optical demultiplexing/multiplexing device in the prior art.

Figure 16 shows the configuration of the 1 x 8 optical demultiplexing/multiplexing device in the prior art.

### EMBODIMEMTS OF THE INVENTION

The optical demultiplexing/multiplexing device built in accordance with the present invention will be described referring to the drawings.

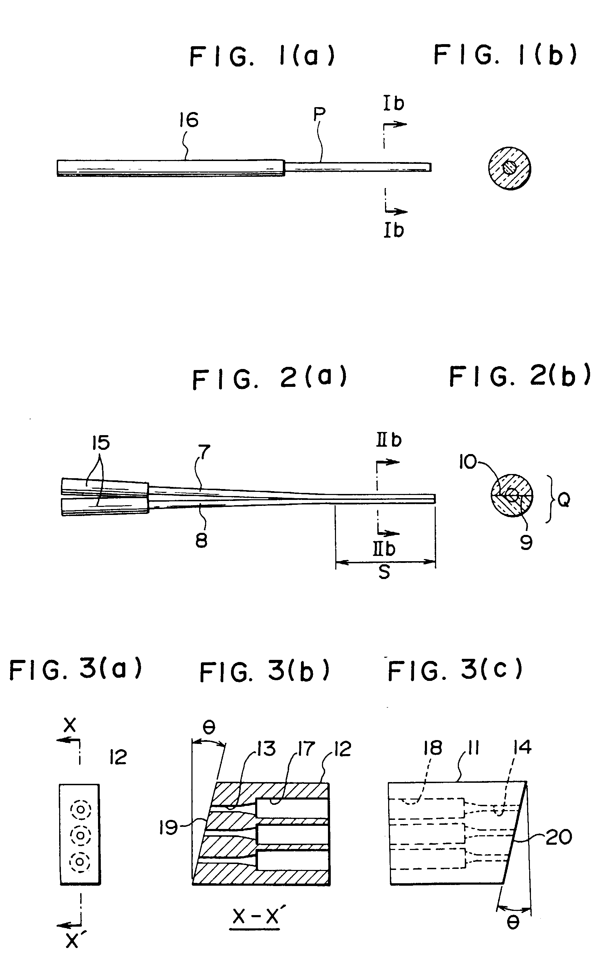

First embodiment of the 1 x 4 optical demultiplexing/multiplexing device built in accordance with the present invention will be described hereafter referring to Figures 1(a) through 8.

Figure 1(a) shows an extended top view and Figure 1(b) shows an enlarged side view of the feed through optical fiber used in a first embodiment of the optical demultiplexing/multiplexing device built in accordance with the present invention.

The cover of optical fiber 16 is partly removed at one edge and optical fiber element P provided to accomplish the coupling is shown.

Figure 2(a) shows an extended top view and Figure 2(b) shows a side view of the multiplexing optical fiber component used in first embodiment of the optical demultiplexing/multiplexing device built in accordance with the present invention. In the optical fibers wherefrom optical fiber elements 7 and 8 are exposed by removing covers 15 thereof. The respective optical fiber elements are sliced at the end portions thereof so that the ratio of one optical fiber end portion to the other optical fiber end portion becomes typically unity or an arbitrary value in dimensions. The end portions of the respective optical fiber elements are finished by polishing flat surfaces 9 and 10, each having a hemicircular cross-section, along the axes of the optical fibers over predetermined length S.

Sliced surfaces 9 and 10 are placed so that surface 9 faces surface 10, and that they are finished to build an optical fiber component Q whose cross-section becomes a circle with the same diameter as a normal optical fiber element in predetermined length S. Optical fiber component Q provides a pair of optical fibers 15 at the other ends.

Figures 3(a), 3(b) and 3(c) show first and second connector plugs 11 and 12, each having a rectangular cross-section. First connector plug 11 provides three holes 14, each having a small diameter, and three other holes 18, each leading through a tapered section to hole 14. Hole 14 can accurately accept optical fiber element P (used for the feedthrough) and optical fiber component Q (used for the multiplexing). Hole 18 can accept the cover of optical fiber 15 or 16. Second connector plug 12 provides three holes 13, each having a small diameter, and three other holes 17, each leading through a tapered section to hole 13. Hole 13 can accurately accept optical fiber element P (used for the feedthrough) and optical fiber component Q (used for the multiplexing). Hole 17 can accept the cover of optical fiber 15 or 16. First and second connector plugs 11 and 12 are cut at angle θ (θ > 8 degrees) with respect to the planes perpendicular to the optical axes on the mating surfaces 20 and 19 thereof, respectively. Angle θ reduces the reflection of the light signals from the optical fiber element surfaces at the edges of the connector plugs 11 and 12, improving the signal to loss ratio.

Holes having small diameters can be replaced by V-grooves in shape or by any other structures which have been used for the alignment of the optical fiber elements in the prior art.

The processes of fabricationg the 1 x 4 optical demultiplexing/multiplexing device which has been described as first embodiment of the optical demultiplexing/multiplexing device will be described hereafter.

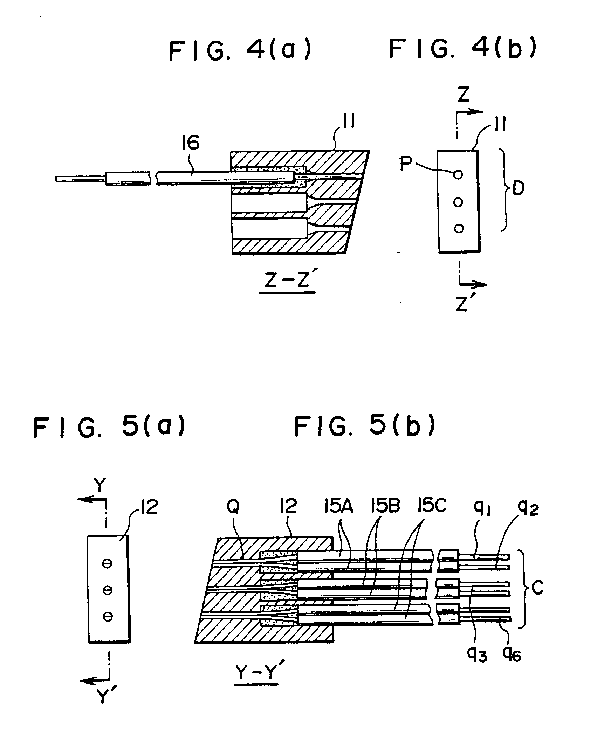

Figures 4(a) through 8 show a series of processes of fabricating the optical multiplexing device. Figures 4(a) and 4(b) show first connector plug 11 whereto optical fiber element P of optical fiber 16 (on feedthrough connector plug D) can apply.

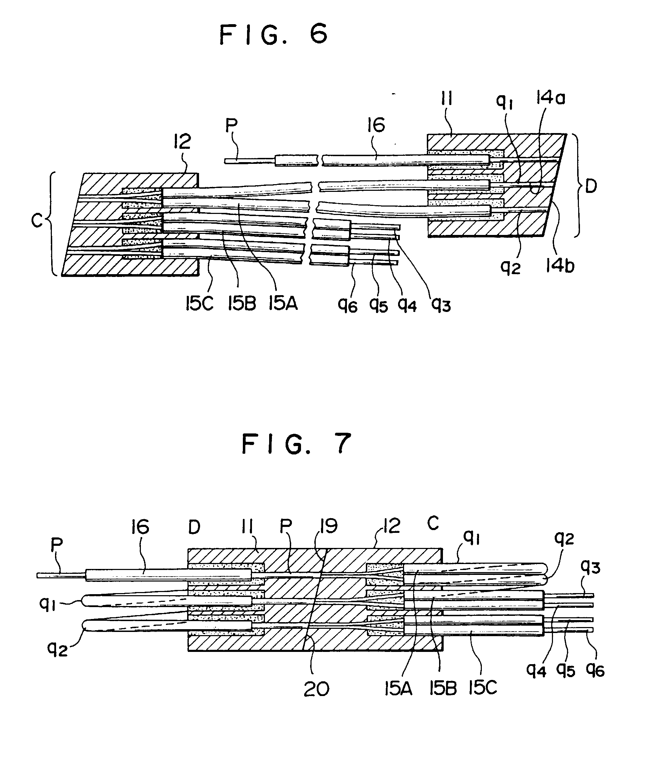

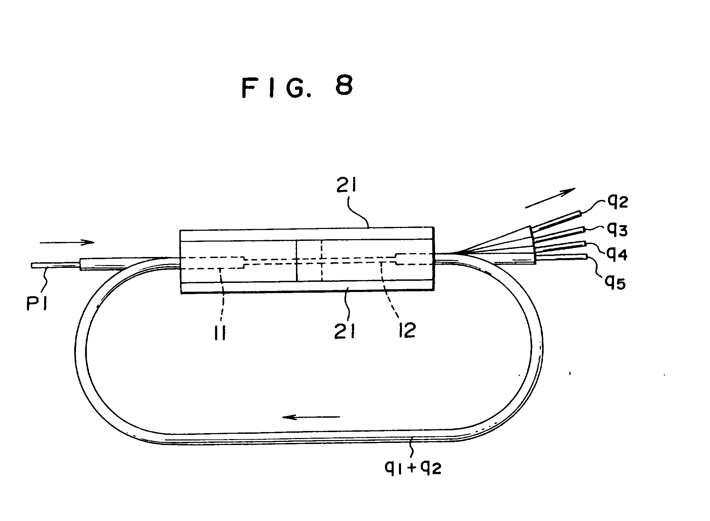

Figures 5(a) and 5(b) show a second connector plug 12 (multiplexing connector plug C) whereto optical fiber component Q of optical fibers 15A, 15B, and 15C can apply. Multiplexed optical fiber element end portions q1 and q2 of optical fiber 15A arranged in first row on second connector plug 12 (multiplexing connector plug C) are, as shown in Figure 6, put into second and third holes 14a and 14b, each having a small diameter, on first connector plug 11 (feedthrough connector plug D). Optical fiber 15A is thus installed in the connector plugs 11 and 12. Figures 7 and 8 show the cross-sectional side and top views of a pair of first and second connector plugs 11 and 12. In Figure 8, first and second connector plugs 11 and 12 are put together by using connecting means 21. Connecting means 21 in the embodiment of Figure 8 are made of a plate of super hard alloy characterized by low linear expansion coefficient, and they are fastened to the connector plugs on the lower and upper sides thereof by using adhesive agent. A glass plate characterized by low linear expansion coefficient can also be used as a set panel.

The light signal multiplexing performed by 1 x 4 optical demultiplexing/multiplexing device of the present embodiment will be described hereafter.

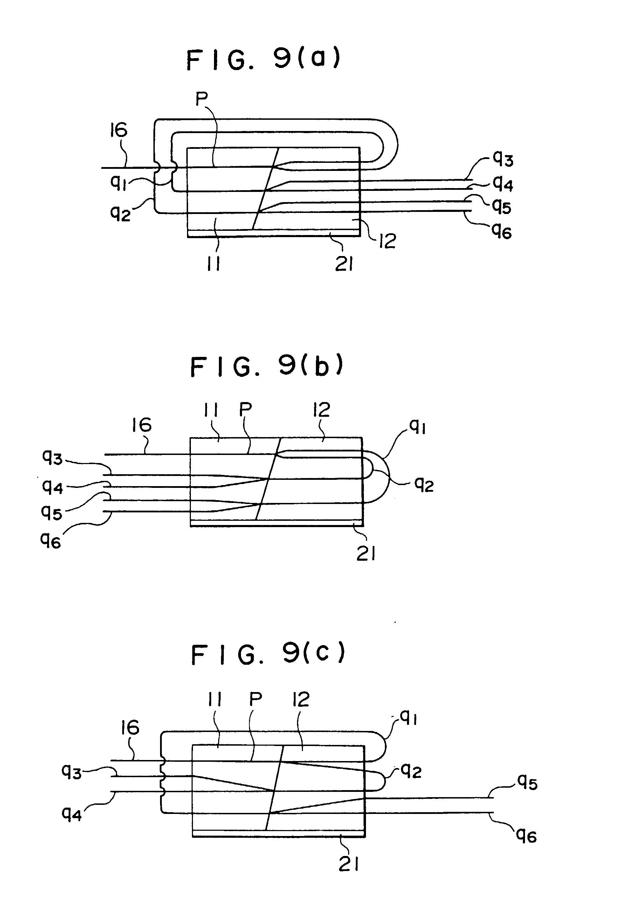

The light signal coming from optical fiber element P in first row on first connector plug 11 (feedthrough connector plug D) is fed to optical fiber element end portions q1 and q2 in the first row on second connector plug 12 (multiplexing connector plug C). The multiplexing is performed as shown in Figure 7 in accordance with the above process. Optical fiber element end portions q1 and q2 lead to the second and the third row on first connector plug 11 (feedthrough connector plug D). The light signals coming from optical fiber element end portions q1 and q2 are, as shown in Figure 9(A), respectively fed to optical fiber element end portions q3 through q6 in the second and the third row on second connector plug 12 (multiplexing connector plug C). Seven holes, each having a small diameter, can be provided on each connector plug if four more optical fiber elements are added to each connector plug of Figure 7. In this configuration, one light signal can be multiplexed to eight circuits in accordance with the same repetitive processes. One light signal can be multiplexed to 2ⁿ circuits (n: integer) in accordance with the same processes repeated "n" times, and a 1 x 2ⁿ optical demultiplexing /multiplexing device can be built in this manner.

Figures 9(b) and 9(c) are other construction schemes than Figure 9(a) wherein 1 x 4 optical demultiplexing /multiplexing device can be built. One of these construction schemes can selectively be used for the multiplexing if a special structure is needed.

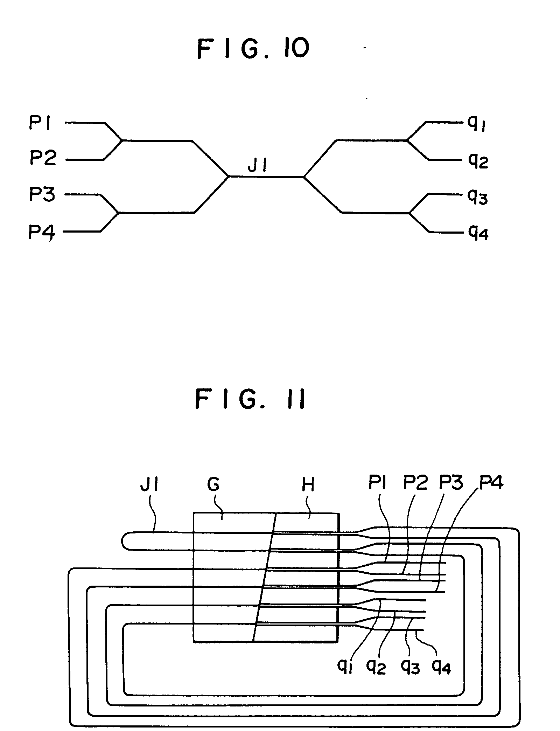

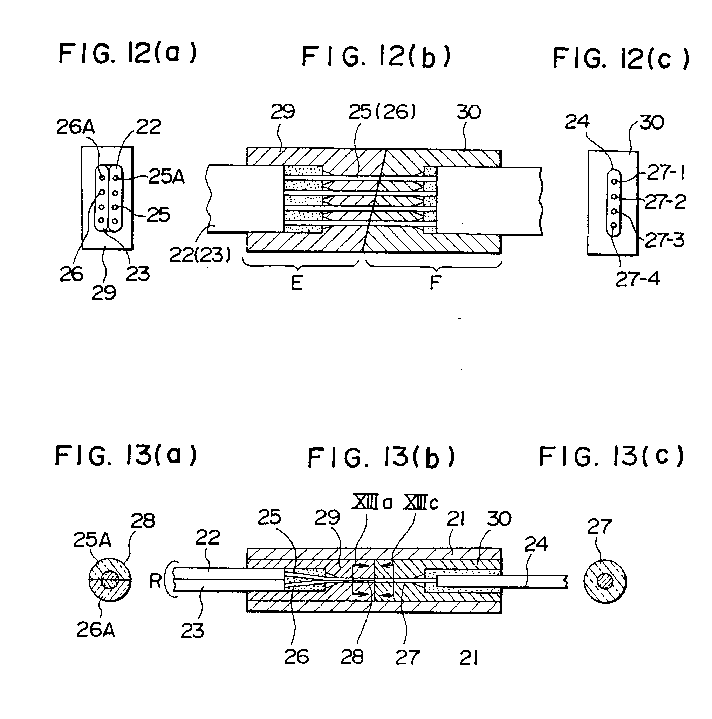

Figures 10 and 11 show the schematic diagram and construction of the 4 x 4 optical demultiplexing/multiplexing device of star type, respectively. The 4 x 4 optical demultiplexing/multiplexing device of star type, shown in Figures 10 and 11, is second embodiment of the optical demultiplexing/multiplexing. device built in accordance with the present invention.

This type of optical demultiplexing/multiplexing device is an advanced version of the basic construction of the optical demultiplexing/multiplexing device described heretofore.

Figure 10 shows the connections of the optical fiber elements in the 4 x 4 optical demultiplexing/multiplexing device, wherein optical fiber elements p1 through p4 in first four circuits on the lefthand side of the drawing are connected to optical fiber elements ql through q4 in second four circuits on the righthand side of the drawing.

Figure 11 shows a top view of the 4 x 4 optical demultiplexing/multiplexing device of Figure 10, wherein H and G indicate the multiplexing connector plug and feedthrough connector plug, respectively. Each connector plug provides six alignment holes arranged in line.

Optical fiber element j1 whose one end portion is connected to the alignment hole in the first row on feedthrough connector plug G is connected to a hole in the second row on connector plug G.

A pair of optical fiber elements in the first row on multiplexing connector plug H are connected to the third and the fourth row on feedthrough connector plug G, and holes in the third and the fourth row on multiplexing connector plug H lead to two pairs of optical fiber elements p1 through p4. The above scheme corresponds to first four circuits on the lefthand side of the optical demultiplexing/multiplexing device of Figure 10.

A pair of optical fiber elements in the second row on multiplexing connector plug H are connected to the fifth and the sixth row on feedthrough connector plug G, and holes in the fifth and the sixth row of multiplexing connector plug H lead to two pairs of optical fiber element end portions q1 through q4. The above scheme corresponds to second four circuits on the righthand side of the optical demultiplexing/multiplexing device of Figure 10. In second embodiment of Figure 11, eight more alignment holes can be added to each connector plug and provided in line on each connector plug. The 8 x 8 optical demultiplexing/multiplexing device of star type can be built in this manner.

A variety of optical demultiplexing/multiplexing devices can be built if the number of alignment holes is altered and if the connections are changed.

Figures 12(b) and 13(b) respectively show the top and front views of the optical demultiplexing/multiplexing device built in accordance with third embodiment of the present invention. In Figure 12(b), the number of alignment holes (m) is specified as four (m=4) and the number of columns as two (2m) for the connector plug on the lefthand side of the drawing.

Feedthrough optical fiber ribbon 24 consists of four optical fiber elements 27-1 through 27-4. A pair of optical fiber ribbons 22 and 23, each ribbon consisting of four feedthrough optical fiber elements at the edges thereof, lead to a multiplexing optical fiber ribbon.

Optical fiber elements 25A and 26A are respectively cut, sliced along their axes, and spliced at their end portions thereof. The end portions are thus jointed to yield another optical fiber element. The front view of optical fiber element end portion 28 constituting a combined portion is shown in Figure 13(b).

First connector plug 29 provides four alignment holes to accept four optical fiber elements of a ribbon, and it can accept end portions 28 of optical fiber elements in a multiplexing optical fiber ribbon. After end portions 28 of optical fiber elements are put into alignment holes of first connector plug 29, they are fastened there.

Second connector plug 30 provides four alignment holes to accept four optical fiber elements of a ribbon, anti it can accept end portions 28 of optical fiber elements in a feedthrough optical fiber ribbon. After end portions 28 of optical fiber elements are put into alignment holes of second connector plug 30, they are fastened there.

The first and second connector plugs 29 and 30 are coupled together by connecting means 21 to form an optical demultiplexing/multiplexing device of "2m" type (m=4).

As described above, the optical demultiplexing/multiplexing device of this type consists of a pair of connector plugs, each having two or more alignment holes, a plurality of multiplexing optical fiber element pairs, each pair has been finished so that a pair of flat surfaces at the end portions thereof are put together, a plurality of feedthrough optical fiber elements, and connecting means which are typically an adapter using these components, an optical demultiplexing/multiplexing device can be built since these components are stable against mechanical shock and vibration as well as ambient change.

The optical demultiplexing/multiplexing device of multiple output type can be built in accordance with the following processes. That is: A feedthrough optical fiber element passing through the corresponding alignment hole of the feedthrough connector plug is led to the corresponding alignment hole of the multiplexing connector plug so as to multiply by a factor of 2 the corresponding optical fiber element. A pair of multiplexed optical fiber elements of an optical fiber component are folded and set back to the feedthrough connector plug. These optical fiber elements are respectively led to the corresponding alignment holes of the multiplexing connector plug so as to multiply by a factor of 2 the corresponding pair of optical fiber elements. This process is repeated to multiply by a factor of 2ⁿ (n: an integer) first optical fiber element. Thus, the multiplexing becomes easy.

This type of optical demultiplexing/multiplexing device can provide 16 through 32 outputs without the use of non-reflection termination although a non-reflection termination is needed for each 2 x 2 optical demultiplexing/multiplexing device in the prior art. This structure reduces the cost of components, simplifies the fabrication processes, and reduces the size of the device.

The optical demultiplexing/multiplexing device built in accordance with the present invention employs the connection of the optical fiber elements at the end portions thereof, but not the optical coupling due to Evanescent effect in the prior art. Variations of the optical response over the specified wavelength range have been reduced.

## Claims

1. A 1x4 optical demultiplexing/multiplexing device consisting of
a feedthrough optical fiber (16) having an optical fiber element (P) whose end portion is adapted to feed input light signal to another optical fiber element;
a set of three multiplexing optical fiber components, each optical fiber component comprising a pair of optical fiber elements (7, 8) whose end portions at one end are cut, sliced along their axes and joined over a predetermined length S so as to form an optical fiber component end portion having the same diameter as said end portion of said feedthrough optical fiber element;
matched first and second connector plugs (11, 12), each having at least three alignment holes (17, 18) which mate with the corresponding alignment holes in the other connector plug, when the plugs are aligned; and
connecting means (21) to keep said first and second connector plugs (11, 12) connected:
wherein
said end portion of said feedthrough optical fiber element (P) is put into a first alignment hole (18) of the first connector plug (11), the joined end portion of the first multiplexing optical fiber component is put into the first alignment hole (17) of the second connector plug (12), the end portions of said pair of optical fiber elements of the first optical fiber component are respectively put into the second and the third alignment hole of said first connector plug (11), and wherein the joined end portions of the remaining two of said three multiplexing optical fiber components are respectively put into the second and the third alignment hole of said second connector plug (12), and said first and second connector plugs are joined by said connecting means (21).

2. A 1x4 optical demultiplexing/multiplexing, device consisting of
a feedthrough optical fiber (16) having an optical fiber element (P) whose end portion is adapted to feed input light signal to another optical fiber element;
a set of three multiplexing optical fiber components, each optical fiber component comprising a pair of optical fiber elements (7, 8) whose end portions at one end are cut, sliced along their axes and joined over a predetermined length S so as to form an optical fiber component end portion having the same diameter as said end portion of said feedthrough optical fiber element;
matched first and second connector plugs (11, 12), each having at least three alignment holes (17, 18) which mate with the corresponding alignment holes in the other connector plug, when the plugs are aligned; and
connecting means (21) to keep said first and second connector plugs (11, 12) connected:
wherein
said end portion of said feedthrough optical fiber element (P) is put into a first alignment hole (18) of the first connector plug (11), the joined end portion of the first multiplexing optical fiber component is put into the first alignment hole (17) of the second connector plug (12), the end portions of said pair of multiplexed optical fiber elements of the first optical component are respectively put into the second and the third alignment hole of said second connector plug (12), and wherein the joined end portions of the remaining two of said three multiplexing optical fiber components are respectively put into the second and the third alignment hole of said first connector plug (11), and said first and second connector plugs are joined by said connecting means (21).

3. A 1x4 optical demultiplexing/multiplexing device consisting of
a feedthrough optical fiber (16) having an optical fiber element (P) whose end portion is adapted to feed input light signal to another optical fiber element;
a set of three multiplexing optical fiber components, each optical fiber component comprising a pair of optical fiber elements (7, 8) whose end portions at one end are cut, sliced along their axes and joined over a predetermined length S so as to form an optical fiber component end portion having the same diameter as said end portion of said feedthrough optical fiber element;
matched first and second connector plugs (11, 12), each having at least three alignment holes (17, 18) which mate with the corresponding alignment holes in the other connector plug, when the plugs are aligned; and
connecting means (21) to keep said first and second connector plugs (11, 12) connected:
wherein
said end portion of said feedthrough optical fiber element (P) is put into a first alignment hole (18) of the first connector plug (11), the joined end portion of the first multiplexing optical fiber component is put into the first alignment hole (17) of the second connector plug (12), the end portion of one of said pair of optical fiber elements of the first optical fiber component is put into the second alignement hole of said second connector plug (12), the end portion of the other of said pair of optical fiber elements of the first optical fiber component is put into the third alignment hole of said first connector plug (11), the joined end portions of the remaining two of said multiplexing optical fiber components are respectively put into the second alignment hole of said first connector plug (11) and the third alignment hole of said second connector plug (12), and said first and second connector plugs are joined by said connecting means (21).

4. A 1x2ⁿ (n ≥ 3: integer) optical demultiplexing/multiplexing device consisting of
a feedthrough optical fiber (16) having an optical fiber element (P) whose end portion is adapted to feed input light signal to another optical fiber;
a plurality of multiplexing optical fiber components, each optical fiber component comprising a pair of optical fiber elements (7, 8) whose end portions at one end are cut, sliced along their axes and joined over a predetermined length S so as to form an optical fiber component end portion having a circular cross-section:
matched first and second connector plugs (11, 12), each having a plurality of alignment holes precisely arranged in line which mate with the corresponding alignment holes in the mating connector plug, when the plugs are aligned; and
connecting means (21) to keep said first and second plugs (11, 12) connected:
wherein
one (11) of said pair of connector plugs is used as a multiplexing connector plug where the joined end portions of said plurality of multiplexing optical fiber components are respectively put into the corresponding alignment holes thereof, the other said pair of connector plugs is used as a feedthrough connector plug (12) where said feedthrough optical fiber element (P) is put into the first alignment hole in the first row thereof, the end portions of a pair of optical fiber elements leaving from the first alignment hole of said multiplexing connector plug (11) are respectively put into the second and the third alignment hole in the second and the third row of said feedthrough connector plug (12), the end portions of a pair of optical fiber elements leading from the second alignment hole in the second row of said multiplexing connector plug (11) are respectively put into the fourth and the fifth alignment hole in the fourth and the fifth row of said feedthrough connector plug (12), the end portions of a pair of optical fiber elements leading from the third alignment hole in the third row of said mutitiplexing connector plug (11) are respectively put into the sixth and the seventh alignment hole in the sixth and the seventh row of said feedthrough connector plug (12), the same configurations are repeated to multiplex the light signals into 2ⁿ (n ≥ 3: integer) circuits, and said feedthrough and multiplexing connector plugs are joined by connecting means (21).

5. A 4 x 4 optical demultiplexing/multiplexing device consisting of
a 4 x 1 of optical demultiplexing device section, and
a 1 x 4 optical multiplexing device section:
wherein
said 4 x 1 optical demultiplexing device section consists of
a feedthrough optical fiber having an optical fiber element (J1) whose end portion is adapted to feed output light signal thereof to said 1 x 4 optical multiplexing device section;
a set of three demultiplexing optical fiber components, each optical fiber component comprising a pair of optical fiber elements whose end portions at one end are cut, sliced along their axes and joined over a predetermined length S so as to form an optical fiber component end portion having the same diameter as said end portion of said feedthrough optical fiber element;
part of matched first and second connector plugs (G, H) used for soon of 1 x 4 optical multiplexing section, where each connector plug having at least six alignment holes which mate with the corresponding alignment holes in the other connector plug, when the plugs are aligned; and
connecting means (21) to keep said first and second connector plugs connected:
and said 1 x 4 optical multiplexing device section consists of
said feedthrough optical fiber, the other end portion of its optical fiber element (J1) being adapted to feed the input light signal thereof from said 4 x 1 optical multiplexing device section;
a set of three multiplexing optical fiber components, each optical fiber component comprising a pair of optical fiber elements whose end portions at one end are cut, sliced along their axes and joined over a predetermined length S so as to form an optical fiber component end portion having the same diameter as said second end portion of said feedthrough optical fiber element;
remaining part of said matched first and second connector plugs (G, H) used for said 4 x 1 optical demultiplexing device section, where each connector plug having at least six alignment holes which mate with the corresponding alignment holes in the other connector plug;
and
said connecting means which has been used for said 4 x 1 optical demultiplexing device section:
wherein
the end portions of said feedthrough optical fiber element (J1) are respectively put into said alignment holes in the first and the second row on said first connector plug (G), the joined end portion of the first demultiplexing optical fiber component is put into the first row on said second connector plug (H), the end portions of the optical fiber elements of said first demultiplexing optical fiber component are put into the third and the fourth row on said first connector plug (G), the joined end portions of the second and the third demultiplexing optical fiber components are put into the third and the fourth row on said second connector plug (H), the joined end portion of the first multiplexing optical fiber component is put into the second row on the second connector plug (H), the end portions of the optical fiber elements of said first multiplexing optical fiber component are put into the fifth and the sixth row on the first connector plug (G), and the joined end portions of the second and the third multiplexing optical fiber components are put into the fifth and the sixth row on second connector plug (H).

## Patentansprüche

1. 1x4 optischer Demultiplexer/Multiplexer, bestehend aus
einem Durchführungs-Lichtleiter (16) mit einem Lichtleiter-Element (P), dessen Endabschnitt geeignet ist, ein Licht-Eingabesignal zu einem anderen Lichtleiter-Element zu' führen;
einem Satz von drei Multiplexer-Lichtleiter-Komponenten mit jeweils einem Paar von Lichtleiter-Elementen (7, 8), deren Endabschnitte an einem Ende abgeschnitten, entlang ihrer Achsen angeschnitten und über eine vorgegebene Länge S zusammengefügt sind, um einen Lichtleiter-Komponenten-Endabschnitt zu bilden, der denselben Durchmesser wie der Endabschnitt des Durchführungs-Lichtleiter-Elements hat;
passenden ersten und zweiten Steckverbindern (11, 12) mit jeweils wenigstens drei Ausrichtöffnungen (17, 18), die mit den entsprechenden Ausrichtöffnungen im anderen Steckverbinder fluchten, wenn die Steckverbinder ausgerichtet sind; und
einer Verbindungseinrichtung (21), um den ersten und zweiten Steckverbinder (11, 12) verbunden zu halten;
wobei
der Endabschnitt des Durchführungs-Lichtleiter-Elements (P) in eine erste Ausrichtöffnung (18) des ersten Steckverbinders (11) gesteckt ist; der zusammengefügte Endabschnitt der ersten Multiplexer-Lichtleiter-Komponente in die erste Ausrichtöffnung (17) des zweiten Steckverbinders (12) gesteckt ist; die Endabschnitte des Paars von Lichtleiter-Elementen der ersten Lichtleiter-Komponente jeweils in die zweite und dritte Ausrichtöffnung des ersten Steckverbinders (11) gesteckt sind, und wobei die zusammengefügten Endabschnitte der verbleibenden zwei der drei Multiplexer-Lichtleiter-Komponenten in die zweite bzw. dritte Ausrichtöffnung des zweiten Steckverbinders (12) gesteckt sind; und der erste und zweite Steckverbinder mittels der Verbindungseinrichtung (21) verbunden sind.

2. 1x4 optischer Demultiplexer/Multiplexer, bestehend aus
einem Durchführungs-Lichtleiter (16) mit einem Lichtleiter-Element (P), dessen Endabschnitt geeignet ist, ein Licht-Eingabesignal zu einem anderen Lichtleiter-Element zu führen;
einem Satz von drei Multiplexer-Lichtleiter-Komponenten mit jeweils einem Paar von Lichtleiter-Elementen (7, 8), deren Endabschnitte an einem Ende abgeschnitten, entlang ihrer Achsen angeschnitten und über eine vorgegebene Länge S zusammengefügt sind, um einen Lichtleiter-Komponenten-Endabschnitt zu bilden, der denselben Durchmesser wie der Endabschnitt des Durchführungs-Lichtleiter-Elements hat;
passenden ersten und zweiten Steckverbindern (11, 12) mit jeweils wenigstens drei Ausrichtöffnungen (17, 18), die mit den entsprechenden Ausrichtöffnungen im anderen Steckverbinder fluchten, wenn die Steckverbinder ausgerichtet sind; und
einer Verbindungseinrichtung (21), um den ersten und zweiten Steckverbinder (11, 12) verbunden zu halten;
wobei
der Endabschnitt des Durchführungs-Lichtleiter-Elements (P) in eine erste Ausrichtöffnung (18) des ersten Steckverbinders (11) gesteckt ist; der zusammengefügte Endabschnitt der ersten Multiplexer-Lichtleiter-Komponente in die erste Ausrichtöffnung (17) des zweiten Steckverbinders (12) gesteckt ist; die Endabschnitte des Paars von Multiplex-Lichtleiter-Elementen der ersten Lichtleiter-Komponente jeweils in die zweite und dritte Ausrichtöffnung des zweiten Steckverbinders (12) gesteckt sind; und wobei die zusammengefügten Endabschnitte der verbleibenden zwei der drei Multiplexer-Lichtleiter-Komponenten in das zweite bzw. dritte Ausrichtöffnung des ersten Steckverbinders (11) gesteckt sind; und der erste und zweite Steckverbinder mittels der Verbindungseinrichtung (21) verbunden sind.

3. 1x4 optischer Demultiplexer/Multiplexer, bestehend aus
einem Durchführungs-Lichtleiter (16) mit einem Lichtleiter-Element (P), dessen Endabschnitt geeignet ist, ein Licht-Eingabesignal zu einem anderen Lichtleiter-Element zu führen;
einem Satz von drei Multiplexer-Lichtleiter-Komponenten mit jeweils einem Paar von Lichtleiter-Elementen (7, 8), deren Endabschnitte an einem Ende abgeschnitten, entlang ihrer Achsen angeschnitten und über eine vorgegebene Länge S zusammengefügt sind, um einen Lichtleiter-Komponenten-Endabschnitt zu bilden, der denselben Durchmesser wie der Endabschnitt des Durchführungs-Lichtleiter-Elements hat;
passenden ersten und zweiten Steckverbindern (11, 12) mit jeweils wenigstens drei Ausrichtöffnungen (17, 18), die mit den entsprechenden Ausrichtöffnungen im anderen Steckverbinder fluchten, wenn die Steckverbinder ausgerichtet sind; und
einer Verbindungseinrichtung (21), um den ersten und zweiten Steckverbinder (11, 12) verbunden zu halten;
wobei
der Endabschnitt des Durchführungs-Lichtleiter-Elements (P) in eine erste Ausrichtöffnung (18) des ersten Steckverbinders (11) gesteckt ist; der zusammengefügte Endabschnitt der ersten Multiplexer-Lichtleiter-Komponente in die erste Ausrichtöffnung (17) des zweiten Steckverbinders (12) gesteckt ist; der Endabschnitt von einem der beiden Lichtleiter-Elemente der ersten Lichtleiter-Komponente in die zweite Ausrichtöffnung des zweiten Steckverbinders (12) gesteckt ist; der Endabschnitte des anderen der beiden Lichtleiter-Elemente der ersten Lichtleiter-Komponente in die dritte Ausrichtöffnung des ersten Steckverbinders (11) gesteckt ist; die verbundenen Endabschnitte der verbleibenden beiden Multiplexer-Lichtleiter-Komponenten in die zweite Ausrichtöffnung des ersten Steckverbinders (11) bzw. die dritte Ausrichtöffnung des zweiten Steckverbinders (12) gesteckt sind; und der erste und zweite Steckverbinder mittels der Verbindungseinrichtung (21) verbunden sind.

4. 1x2ⁿ (n ≥ 3: ganzzahlig) optischer Demultiplexer/Multiplexer, bestehend aus
einem Durchführungs-Lichtleiter (16) mit einem Lichtleiter-Element (P), dessen Endabschnitt geeignet ist, ein Licht-Eingabesignal zu einem anderen Lichtleiter zu führen;
einer Mehrzahl von Multiplexer-Lichtleiter-Komponenten, mit jeweils einem Paar von Lichtleiter-Elementen (7, 8), deren Endabschnitte an einem Ende abgeschnitten, entlang ihrer Achsen angeschnitten und über eine vorgegebene Länge S zusammengefügt sind, um einen Lichtleiter-Komponenten-Endabschnitt mit einem kreisförmigen Querschnitt zu bilden;
passenden ersten und zweiten Steckverbindern (11, 12) mit jeweils einer Mehrzahl von Ausrichtöffnungen, die exakt auf eine Linie angeordnet sind und mit den entsprechenden Ausrichtöffnungen im anliegenden Steckverbinder fluchten, wenn die Steckverbinder ausgerichtet sind; und
einer Verbindungseinrichtung (21), um den ersten und zweiten Steckverbinder (11, 12) verbunden zu halten;
wobei
einer der beiden Steckverbinder als Multiplexer-Steckverbinder (11) verwendet wird, wobei die zusammengefügten Endabschnitte der Mehrzahl von Multiplexer-Lichtleiter-Komponenten jeweils in dessen zugehörige Ausrichtöffnungen gesteckt sind; der andere der beiden Steckverbinder als Durchführungs-Steckverbinder (12) verwendet wird, wobei das Durchführungs-Lichtleiter-Element (P) in die erste Ausrichtöffnung in dessen erster Zeile gesteckt ist; die Endabschnitte eines Paars von Lichtleiter-Elementen, die aus der ersten Ausrichtöffnung des Multiplexer-Steckverbinders (11) herausführen, in die zweite bzw. dritte Ausrichtöffnung in
der zweiten und dritten Zeile des Durchführungs-Steckverbinders (12) gesteckt sind; die Endabschnitte eines Paars von Lichtleiter-Elementen, die aus der zweiten Ausrichtöffnung in der zweiten Zeile des Multiplexer-Steckverbinders (11) herausführen, in das vierte bzw. fünfte Ausrichtöffnung in der vierten und fünften Zeile des Durchführungs-Steckverbinders (12) gesteckt sind; die Endabschnitte eines Paares von Lichtleiter-Elementen, die aus der dritten Ausrichtöff-' nung in der dritten Zeile des Multiplexer-Steckverbinders (11) herausführen, in die sechste bzw. siebte Ausrichtöffnung in der sechsten und siebten Zeile des Durchführungs-Steckverbinders (12) gesteckt sind; die gleichen Konfigurationen wiederholt werden, um die Lichtsignale in 2ⁿ (n ≥ 3: ganzzahlig) Schaltungen zu multiplexen; und der Durchführungs- und der Multiplexer-Steckerverbinder mittels der Verbindungseinrichtung (21) verbunden sind.

5. 4 x 4 optischer Demultiplexer/Multiplexer, bestehend aus
einem 4 x 1 optischen Demultiplexer-Abschnitt, und
einem 1 x 4 optischen Multiplexer-Abschnitt,
wobei
der 4 x 1 optische Demultiplexer-Abschnitt folgende Merkmale aufweist:
einen Durchführungs-Lichtleiter mit einem Lichtleiter-Element (J1), dessen Endabschnitt geeignet ist, sein Licht-Ausgabesignal zu dem 1 x 4 optischen Multiplexer-Abschnitt zu führen;
einen Satz von drei Demultiplexer-Lichtleiter-Komponenten mit jeweils einem Paar von Lichtleiter-Elementen, deren Endabschnitte an einem Ende abgeschnitten, entlang ihrer Achsen angeschnitten und über eine vorgegebene Länge S zusammengefügt sind, um einen Lichtleiter-Komponenten-Endabschnitt mit demselben Durchmesser wie der Endabschnitt des Durchführungs-Lichtleiter-Elements zu bilden;
einen Teil von passenden ersten und zweiten Steckverbindern (G, H), die für den 1 x 4 optischen Multiplexer-Abschnitt verwendet werden, wobei jeder Steckverbinder wenigstens sechs Ausrichtöffnungen aufweist, die mit den entsprechenden Ausrichtöffnungen im anderen Steckverbinder fluchten, wenn die Steckverbinder ausgerichtet sind; und
einer Verbindungseinrichtung (21), um den ersten und zweiten Steckverbinder verbunden zu halten;
und der 1 x 4 optische Multiplexer-Abschnitt folgende Merkmale aufweist:
den Durchführungs-Lichtleiter, wobei der andere Endabschnitt seines Lichtleiters-Elements (J1) geeignet ist, sein Lichteingabesignale aus dem 4 x 1 optischen Demultiplexer-Abschnitt zu führen;
einen Satz von drei Multiplexer-Lichtleiter-Komponenten, mit jeweils einem Paar von Lichtleiter-Elementen, deren Endabschnitte an einem Ende abgeschnitten, entlang ihrer Achsen angeschnitten und über eine vorgegebene Länge S zusammengefügt sind, um einen Lichtleiter-Komponenten-Endabschnitt mit demselben Durchmesser wie der zweite Endabschnitt des Durchführungs-Lichtleiter-Elements zu bilden;
den verbleibenden Teile der passenden ersten und zweiten Steckverbinder (G, H), die für den 4 x 1 optischen Demultiplexer-Abschnitt verwendet werden, wobei jeder Steckverbinder wenigstens sechs Ausrichtöffnungen aufweist, die mit den entsprechenden Ausrichtöffnungen im anderen Steckverbinder fluchten; und
die Verbindungseinrichtung, die für den 4 x 1 optischen Demultiplexer-Abschnitt verwendet wurde;
wobei
die Endabschnitte des Durchführungs-Lichtleiter-Elements (J1) in die Ausrichtöffnung in der ersten bzw. zweiten Zeile des ersten Steckverbinders (G) gesteckt sind; der zusammengefügte Endabschnitt der ersten Demultiplexer-Lichtleiter-Komponente in die erste Zeile des zweiten Steckverbinders (H) gesteckt ist; die Endabschnitte der Lichtleiter-Elemente der ersten Demultiplexer-Lichtleiter-Komponente in die dritte und vierte Zeile des ersten Steckverbinders (G) gesteckt sind; die zusammengefügten Endabschnitte der zweiten und dritten Demultiplexer-Lichtleiter-Komponenten in die dritte und vierte Zeile des zweiten Steckverbinders (H) gesteckt sind; der zusammengefügte Endabschnitt der ersten Multiplexer-Lichtleiter-Komponente in die zweite Zeile des zweiten Steckverbinders (H) gesteckt ist; die Endabschnitte der Lichtleiter-Elemente der ersten Multiplexer-Lichtleiter-Komponente in die fünfte und sechste Zeile des ersten Steckverbinders (G) gesteckt sind; und die zusammengefügten Endabschnitte der zweiten und dritten Multiplexer-Lichtleiter-Komponenten in die fünfte und sechste Zeile des zweiten Steckverbinders (H) gesteckt sind.

## Revendications

1. Dispositif optique de démultiplexage/multiplexage 1 x 4 consistant en
une fibre optique de traversée (16) possédant un élément de fibre optique (P) dont la partie d'extrémité est agencée pour fournir un signal lumineux d'entrée à un autre élément de fibre optique;
un ensemble de trois composants de fibre optique de multiplexage, chaque composant de fibre optique comprenant une paire d'éléments de fibre optique (7, 8) dont les parties d'extrémité à une extrémité sont coupées, tranchées le long de leurs axes et jointes sur une longueur prédéterminée S de manière à former une partie d'extrémité de composant de fibre optique possédant le même diamètre que ladite partie d'extrémité dudit élément de fibre optique de traversée;
des première et seconde fiches de connecteur assorties (11, 12), possédant chacune au moins trois trous d'alignement (17, 18) qui s'adaptent aux trous d'alignement correspondants dans l'autre fiche de connecteur, quand les fiches sont alignées; et
des moyens de connexion (21) pour maintenir connectées lesdites première et seconde fiches de connecteur (11,12);
dans lequel
ladite partie d'extrémité dudit élément de fibre optique de traversée (P) est placée dans un premier trou d'alignement (18) de la première fiche de connecteur (11), la partie d'extrémité jointe du premier composant de fibre optique de multiplexage est placée dans le premier trou d'alignement (17) de la seconde fiche de connecteur (12), les parties d'extrémité de ladite paire d'éléments de fibre optique du premier composant de fibre optique sont respectivement placées dans le second et le troisième trous d'alignement de ladite première fiche de connecteur (11), et dans lequel les parties d'extrémité jointes des deux restants desdits trois composants de fibre optique de multiplexage sont respectivement placées dans le second et le troisième trous d'alignement de ladite seconde fiche de connecteur (12), et lesdites première et seconde fiches de connecteur sont reliées par lesdits moyens de connexion (21).

2. Dispositif optique de démultiplexage/multiplexage 1 x 4 consistant en
une fibre optique de traversée (16) possédant un élément de fibre optique (P) dont la partie d'extrémité est agencée pour fournir un signal lumineux d'entrée à un autre élément de fibre optique;
un ensemble de trois composants de fibre optique de multiplexage, chaque composant de fibre optique comprenant une paire d'éléments de fibre optique (7, 8) dont les parties d'extrémité à une extrémité sont coupées, tranchées le long de leurs axes et jointes sur une longueur prédéterminée S de manière à former une partie d'extrémité de composant de fibre optique possédant le même diamètre que ladite partie d'extrémité dudit élément de fibre optique de traversée;
des première et seconde fiches de connecteur assorties (11, 12), possédant chacune au moins trois trous d'alignement (17, 18) qui s'adaptent aux trous d'alignement correspondants dans l'autre fiche de connecteur, quand les fiches sont alignées; et
des moyens de connexion (21) pour maintenir connectées lesdites première et seconde fiches de connecteur (11,12);
dans lequel
ladite partie d'extrémité dudit élément de fibre optique de traversée (P) est placée dans un premier trou d'alignement (18) de la première fiche de connecteur (11), la partie d'extrémité jointe du premier composant de fibre optique de multiplexage est placée dans le premier trou d'alignement (17) de la seconde fiche de connecteur (12), les parties d'extrémité de ladite paire d'éléments de fibre optique de multiplexage du premier composant de fibre optique sont respectivement placées dans le second et le troisième trous d'alignement de ladite seconde fiche de connecteur (12), et dans lequel les parties d'extrémité jointes des deux restants desdits trois composants de fibre optique de multiplexage sont respectivement placées dans le second et le troisième trous d'alignement de ladite première fiche de connecteur (11), et lesdites première et seconde fiches de connecteur sont reliées par lesdits moyens de connexion (21).

3. Dispositif optique de démultiplexage/multiplexage 1 x 4 consistant en
une fibre optique de traversée (16) possédant un élément de fibre optique (P) dont la partie d'extrémité est agencée pour fournir un signal lumineux d'entrée à un autre élément de fibre optique;
un ensemble de trois composants de fibre optique de multiplexage, chaque composant de fibre optique comprenant une paire d'éléments de fibre optique (7, 8) dont les parties d'extrémité à une extrémité sont coupées, tranchées le long de leurs axes et jointes sur une longueur prédéterminée S de manière à former une partie d'extrémité de composant de fibre optique possédant le même diamètre que ladite partie d'extrémité dudit élément de fibre optique de traversée;
des première et seconde fiches de connecteur assorties (11, 12), possédant chacune au moins trois trous d'alignement (17, 18) qui s'adaptent aux trous d'alignement correspondants dans l'autre fiche de connecteur, quand les fiches sont alignées; et
des moyens de connexion (21) pour maintenir connectées lesdites première et seconde fiches de connecteur (11,12);
dans lequel
ladite partie d'extrémité dudit élément de fibre optique de traversée (P) est placée dans un premier trou d'alignement (18) de la première fiche de connecteur (11), la partie d'extrémité jointe du premier composant de fibre optique de multiplexage est placée dans le premier trou d'alignement (17) de la seconde fiche de connecteur (12), la partie d'extrémité d'un des éléments de ladite paire d'éléments de fibre optique du premier composant de fibre optique est placée dans le second trou d'alignement de ladite seconde fiche de connecteur (12), la partie d'extrémité de l'autre élément de ladite paire d'éléments de fibre optique du premier composant de fibre optique est placée dans le troisième trou d'alignement de ladite première fiche de connecteur (11), les parties d'extrémité jointes des deux restants desdits composants de fibre optique de multiplexage sont respectivement placées dans le second trou d'alignement de ladite première fiche de connecteur (11) et le troisième trou d'alignement de ladite seconde fiche de connecteur (12), et lesdites première et seconde fiches de connecteur sont reliées par lesdits moyens de connexion (21).

4. Dispositif optique de démultiplexage/multiplexage 1x2ⁿ (n≥3: entier) consistant en
une fibre optique de traversée (16) possédant un élément de fibre optique (P) dont la partie d'extrémité est agencée pour fournir un signal lumineux d'entrée à un autre élément de fibre optique;
une pluralité de composants de fibre optique de multiplexage, chaque composant de fibre optique comprenant une paire d'éléments de fibre optique (7, 8) dont les parties d'extrémité à une extrémité sont coupées, tranchées le long de leurs axes et jointes sur une longueur prédéterminée S de manière à former une partie d'extrémité de composant de fibre optique possédant une section transversale circulaire;
des première et seconde fiches de connecteur assorties (11, 12), possédant chacune une pluralité de trous d'alignement (17, 18) précisément alignés qui s'adaptent aux trous d'alignement correspondant dans la fiche de connecteur assortie, quand les fiches sont alignées; et
des moyens de connexion (21) pour maintenir connectées lesdites première et seconde fiches de connecteur (11,12);
dans lequel
une fiche (11) de ladite paire de fiches de connecteur est utilisée comme une fiche de connecteur de multiplexage où les parties d'extrémité jointes de ladite pluralité de composants de fibre optique de multiplexage sont respectivement placées dans leurs trous d'alignement correspondants, l'autre fiche de ladite paire de fiches de connecteur est utilisée comme une fiche de connecteur de traversée (12) où ledit élément de fibre optique de traversée (P) est placé dans le premier trou d'alignement de sa première rangée, les parties d'extrémité d'une paire d'éléments de fibre optique venant du premier trou d'alignement de ladite fiche de connecteur de multiplexage (11) sont respectivement placées dans le second et le troisième trou d'alignement de la deuxième et la troisième rangée de ladite fiche de connecteur de traversée (12), les parties d'extrémités d'une paire d'éléments de fibre optique venant du second trou d'alignement de la seconde rangée de ladite fiche de connecteur de multiplexage (11) sont respectivement placées dans le quatrième et le cinquième trou d'alignement de la quatrième et la cinquième rangée de ladite fiche de connecteur de traversée (12), les parties d'extrémité d'une paire d'éléments de fibre optique venant du troisième trou d'alignement de la troisième rangée de ladite fiche de connecteur de multiplexage (11) sont respectivement placées dans le sixième et le septième trou d'alignement de la sixième et la septième rangée de ladite fiche de connecteur de traversée (12), les mêmes configurations sont répétées pour multiplexer les signaux lumineux dans 2ⁿ (n≥3: entier) circuits, et lesdites fiches de traversée et de multiplexage sont reliées par les moyens de connexion (21).

5. Dispositif optique de démultiplexage/multiplexage 4 x 4 consistant en
une partie de dispositif de démultiplexage optique 4 x 1, et
une partie de dispositif de multiplexage optique 1 x 4;
dans lequel
ladite partie de dispositif de démultiplexage optique 4 x 1 consiste en
une fibre optique de traversée possédant un élément de fibre optique (J1) dont la partie d'extrémité est agencée pour fournir son signal lumineux d'entrée à ladite partie de dispositif de démultiplexage optique 1 x 4;
un ensemble de trois composants de fibre optique de démultiplexage, chaque composant de fibre optique comprenant une paire d'éléments de fibre optique dont les parties d'extrémité à une extrémité sont coupées, tranchées le long de leurs axes et jointes sur une longueur prédéterminée S de manière à former une partie d'extrémité de composant de fibre optique possédant le même diamètre que ladite partie d'extrémité dudit élément de fibre optique de traversée;
une portion de première et seconde fiches de connecteur assorties (G, H) utilisée pour ladite partie de multiplexage optique 1 x 4, où chaque fiche de connecteur possède au moins six trous d'alignement qui s'adaptent aux trous d'alignement correspondants dans l'autre fiche de connecteur, quand les fiches sont alignées; et
des moyens de connexion (21) pour maintenir connectées lesdites première et seconde fiches de connecteur (11,12);
et ladite partie de dispositif de multiplexage optique 1 x 4 consiste en
ladite fibre optique de traversée, l'autre partie d'extrémité de son élément de fibre optique (J1) étant agencée pour fournir son signal lumineux d'entrée à partir de ladite partie de dispositif de multiplexage optique 4 x 1;
un ensemble de trois composants de fibre optique de multiplexage, chaque composant de fibre optique comprenant une paire d'éléments de fibre optique dont les parties d'extrémité à une extrémité sont coupées, tranchées le long de leurs axes et jointes sur une longueur prédéterminée S de manière à former un partie d'extrémité de composant de fibre optique possédant le même diamètre que ladite seconde partie d'extrémité dudit élément de fibre optique de traversée;
la portion restante desdites première et seconde fiches de connecteur assorties (G, H) utilisée pour ladite partie de dispositif de démultiplexage optique 4 x 1, où chaque fiche de connecteur possède au moins six trous d'alignement qui s'adaptent aux trous d'alignement correspondants dans l'autre fiche de connecteur;
et
lesdits moyens de connexion qui ont été utilisés pour ladite partie de dispositif de démultiplexage optique 4 x 1;
dans lequel
les parties d'extrémité dudit élément de fibre optique de traversée (J1) sont respectivement placées dans lesdits trous d'alignement dans la première et la deuxième rangée de ladite première fiche de connecteur (G), la partie d'extrémité jointe du premier composant de fibre optique de démultiplexage est placée dans la première rangée de ladite seconde fiche de connecteur (H), les parties d'extrémité des éléments de fibre optique dudit premier composant de fibre optique de démultiplexage sont placés dans la troisième et la quatrième rangées de ladite première fiche de connecteur (G), les parties d'extrémité jointes des second et troisième composants de fibre optique de démultiplexage sont placés dans la troisième et la quatrième rangées de ladite seconde fiche de connecteur (H), la partie d'extrémité jointe du premier composant de fibre optique de multiplexage est placée dans la seconde rangée de la seconde fiche de connecteur (H), les parties d'extrémité des éléments de fibre optique dudit premier composant de fibre optique de multiplexage sont placés dans la cinquième et la sixième rangées de la première fiche de connecteur (G), et les parties d'extrémité jointes du second et du troisième composant de fibre optique de multiplexage sont placées dans les cinquième et les sixième rangées de la seconde fiche de connecteur (H).
